# EUROPEAN PATENT APPLICATION

(11) **EP 0 884 368 A1**
(43) Date of publication of application: **16.12.1998**
(21) Application number: 98301721.1
(22) Date of filing: 09.03.1998
(51) Int. Cl.: C09D 9/00, C11D 7/60, C08J 11/28

(54) **Dissolving agent for cured polyorganosiloxane material**

(30) Priority: 13.03.1997 JP 59540/97
(71) Applicant: GENERAL ELECTRIC COMPANY, Schenectady, NY 12345 (US); TOSHIBA SILICONE CO., LTD., Tokyo 106 (JP)
(72) Inventor: Saitoh, Nobuhiro, Ohta-shi, Gunma 373 (JP); Yamafuji, Shigeo, Gotenba-shi, Shizuoka 412 (JP); Takenaka, Kenji, Ohta-shi, Gunma 373 (JP); Rubinsztajn, Slawomir, Niskayuna, New York 12309 (US)
(74) Representative: Szary, Anne Catherine, Dr.

(57) **Abstract**

Disclosed are a dissolving agent for a polyorganosiloxane type cured material, which comprises (A) a phosphonitrile compound and (B) a linear organosiloxane oligomer; and a process for removing a cured polyorganosiloxane material, which comprises (1) treating a polyorganosiloxane type cured material attached to a substance, by the dissolving agent, and then (2) washing the substance with a detergent containing an organosiloxane oligomer.

## Description

This invention relates to a dissolving agent for removing a cured polyorganosiloxane material from a substrate or an article to which a cured polyorganosiloxane material is attached, and a process for removing said cured material by using the same, more specifically to a dissolving agent which depolymerizes and dissolves a cured polyorganosiloxane material, and a process for removing a cured polyorganosiloxane material from a substrate or an article by further subjecting a polyorganosiloxane dissolved in said dissolving agent to post-treatment.

An article made of a metal and a plastic molded product have been used for various purposes by utilizing characteristics such as heat resistance, chemical resistance, mechanical strength, processability and durability inherently possessed thereby, respectively. For the purpose of highly functionalizing these articles having such characteristics, various kinds of surface processings have been attempted. Further, by utilizing the above advantages, the article made of a metal has been used frequently as a holding jig which is used when various kinds of substrates are subjected to coating processing.

At the time of coating processing, a coating material is sometimes attached to the surface of said article and cured thereon. In the case where high precision is required and the article made of a metal is used, regeneration when a processing mistake is made, or reuse when the article is used as a jig is an important subject from the viewpoints of cost reduction, effective utilization of resources, etc. Also in the plastic molded product, regeneration of a molded product in which a processing mistake is made when processing is carried out for the purpose of improving surface hardness, etc. is an important subject from the viewpoint of cost reduction.

In the prior art, as a process for removing a cured film, for example, physical removal using sandpaper or the like has been attempted. However, such a physical process has problems that it is difficult to apply said process to an article having a complicated shape, removal cannot be carried out completely, and an article is damaged, and some articles cannot be reused.

On the other hand, substances which contain a crosslinkable polyorganosiloxane and form a cured polyorganosiloxane material by curing, such as a silicone sealant, a silicone adhesive seal material and a silicone coating material, have excellent weatherability and durability and have been used for adhesion, sealing, protection or the like of various kinds of substrates and articles. In general, said cured material is not dissolved in an organic solvent and has excellent adhesiveness to substrates and articles, whereby it is difficult to remove said cured material from substrates and articles to which said cured material is once attached.

Therefore, as a process for removing a cured polyorganosiloxane material from various kinds of substrates and articles, there have been known
(1) swelling and releasing by a chlorinated organic solvent;
(2) swelling and releasing by an amine solvent;
(3) decomposition by an alkaline solution of sodium hydroxide, potassium hydroxide or the like (see Japanese Provisional Patent Publication No. 11768/1987 and U.S. Patent No. 2,710,843);
(4) decomposition by silicon alkoxides such as ethyl silicate and an organoalkoxysilane (see Japanese Provisional Patent Publication No. 132590/1989 and International Patent Publication WO 92/03205); and
(5) decomposition by a strongly acidic aqueous solution of an alkylbenzenesulfonic acid, sulfuric acid, hydrofluoric acid or the like (see Japanese Provisional Patent Publication No. 250400/1996),
   etc. However, when the chlorine type organic solvent or the amine type solvent is used, use thereof tends to be limited from the points of environmental preservation, safety, etc. When the alkaline solution, the silicon alkoxides or the strongly acidic aqueous solution is used, there are problems such as corrosion of a metal or glass as a substrate, dissolution and swelling of plastics and rubber, etc. Therefore, improvement of the process has been demanded.

It has been known to use cyclic or linear phosphonitrile compounds as a polymerization or condensation catalyst for synthesizing a polydiorganosiloxane having a high molecular weight by ring-opening polymerization of a cyclic diorganosiloxane oligomer or dehydration condensation of a chain polydiorganosiloxane end-blocked by a hydroxyl group bonded to a silicon atom or a hydrogen atom and has a relatively small polymerization degree (see Japanese Patent Publication No. 41599/1970, Japanese Provisional Patent Publication No. 52300/1974 and Japanese Provisional Patent Publication No. 145240/1995). However, it has not yet been known to use these phosphonitrile compounds for removing a cured polyorganosiloxane material.

### SUMMARY OF THE INVENTION

The object of the present invention is to provide a dissolving agent which exerts less influence on environment and human bodies, neither corrodes nor dissolves a substrate or an article and is to be used for removing a cured polyorganosiloxane material attached to a substrate or an article, easily and favorably, and a process for removing said cured material.

The present inventors have studied in order to achieve the above object and consequently found that a cured polyorganosiloxane material can be removed favorably by using a phosphonitrile compound and a linear polyorganosiloxane oligomer in combination, to accomplish the present invention.

That is, the dissolving agent for a cured polyorganosiloxane material of the present invention comprises:
(A) a phosphonitrile compound and
(B) a linear organosiloxane oligomer represented by the formula:

   R₃SiO[R₂SiO]ₘSiR₃

   (wherein Rs represent substituted or unsubstituted monovalent hydrocarbon groups which may be the same or different; and m is an integer of 0 to 5); and a process for removing said cured material comprises:
   (1) depolymerizing and dissolving said cured material attached to a substance, by the above dissolving agent, and then
   (2) washing the substance with a detergent containing an organosiloxane oligomer to remove said cured material together with the above dissolving agent.

### DESCRIPTION OF THE PREFERRED EMBODIMENTS

Component (A) to be used in the dissolving agent of the present invention is a phosphonitrile compound having a phosphorus-nitrogen bond, and may be exemplified by a phosphorous amide dichloride, a phosphoric acid amide dichloride, a polyphosphazene, etc. Specifically, the phosphorous amide dichloride may be exemplified by C₆H₅NHPCl₂, C₆H₅N(CH₃)PCl₂, C₆H₅N(C₂H₅)PCl₂, (C₆H₅)₂NPCl₂, CH₃NHPCl₂, (CH₃)₂CHNHPCl₂, C₆H₅CH₂NHPCl₂, etc.; and the phosphoric amide dichloride may be exemplified by C₆H₅NHPOCl₂, C₁₀H₇NHPOCl₂, CH₃NHPOCl₂, (CH₃)₂CHNHPOCl₂, C₂H₅NHPOCl₂, etc.

Among polyphosphazenes, since removal of the polyorganosiloxane type cured material can be carried out favorably, a linear phosphonitrile chloride represented by the formula:

OCl₂P(NPCl₂)ₙNPCl₃₋ₚ(X)ₚ (I)

OCl₂P(NPCl₂)ₙN(H)P(O)Cl_{2-q}(X)_{q} (II)

or

Cl₃P(NPCl₂)ᵣNPCl₃·PCl₆ (III)

(wherein X represents OH, OR¹ or OC(O)R² where R¹ and R² each represent an alkyl group, a cycloalkyl group, an aralkyl group or an aryl group; n is an integer of 0 to 10, p is 0, 1 or 2, q is 0 or 1, and r is an integer of 0 to 10) is preferred as Component (A). R¹ and R² may be exemplified by a straight or branched alkyl group such as methyl, ethyl, propyl and butyl; a cycloalkyl group such as cyclohexyl; an aralkyl group such as 2-phenylethyl; and an aryl group such as phenyl and tolyl, respectively. Among them, it is more preferred that n is 1 to 8, r is 1, p is 0 or 1, q is 0, and X is OH; and it is particularly preferred that n is 1 to 3, and p is 1.

Among the polyphosphazenes represented by the formulae (I) to (III), compounds in the above more preferred range are represented by, for example, the formulae:

OCl₂P(NPCl₂)ₙNPCl₂(OH) (Ia)

OCl₂P(NPCl₂)ₙNPCl₃ (Ib)

OCl₂P(NPCl₂)ₙN(H)P(O)Cl₂ (IIa)

Cl₃P(NPCl₂)NPCl₃·PCl₆ (IIIa)

(wherein n is an integer of 0 to 8). Among them, the compound of (Ib) in which n is 0 or 1 has excellent characteristics that it is soluble in organic solvents including ethers such as diethyl ether, esters such as ethyl acetate, aromatic hydrocarbons such as toluene, etc. and can be handled easily.

When Component (A) is used in the dissolving agent of the present invention, it may be used in the form of a compound obtained by further reacting Component (A) with carboxylic acid, sulfonic acid, alcohol, phenol or water. Component (A) can be prepared by a known method as shown in the above publications. For example, in the case of the polyphosphazene, it can be prepared by a method of reacting phosphorus pentachloride with ammonium chloride by heating and refluxing them preferably in tetrachloroethane or the like; reacting phosphorus pentachloride with ammonia; reacting phosphorus pentachloride with mercury amide chloride; or reacting phosphorus nitride with chlorine, etc.

Component (B) to be used in the dissolving agent of the present invention is a linear organosiloxane oligomer represented by the formula:

R₃SiO[R₂SiO]ₘSiR₃

(wherein R and m are as described above). The oligomer may be used singly, or several kinds of the oligomers may be used in combination, for example, a mixture of the oligomers in which m is different may be used. R may be exemplified by a straight or branched alkyl group such as methyl, ethyl, propyl, butyl and hexyl; a cycloalkyl group such as cyclohexyl; an alkenyl group such as vinyl and allyl; an aryl group such as phenyl; an aralkyl group such as 2-phenylethyl; and the above groups substituted by a fluorine atom or the like, for example, a substituted hydrocarbon group such as trifluoromethyl and 3,3,3-trifluoropropyl. Since compatibility with Component (A) and the dissolving property of a polyorganosiloxane depolymerized product from the cured polyorganosiloxane material are good, a methyl group is preferred.

In Component (B), m is an integer of 0 to 5. Since mixing with Component (A) is carried out easily and the cured polyorganosiloxane material does not remain on the surface of a substrate or an article and can be removed favorably after said cured material is depolymerized and dissolved, m is preferably an integer of 0 to 3.

As preferred Component (B) as described above, there may be mentioned

(CH₃)₃SiOSi(CH₃)₃

(CH₃)₃SiO(CH₃)₂SiOSi(CH₃)₃

(CH₃)₃SiO[(CH₃)₂SiO]₂Si(CH₃)₃

(CH₃)₃SiO[(CH₃)₃SiO]₃Si(CH₃)₃.

Since depolymerization and dissolution of the cured polyorganosiloxane material can be carried out favorably, a substrate or an article is neither corroded nor swelled and favorable removal without re-attachment of the composition and the dissolved material to a substrate or an article can be carried out, 0.01 to 10 parts by weight, preferably 0.05 to 0.3 part by weight of Component (A) is mixed based on 100 parts by weight of Component (B).

In order to carry out depolymerization and dissolution of the cured polyorganosiloxane material more favorably, an organic solvent such as an aliphatic hydrocarbon, an aromatic hydrocarbon, an ether and an ester may be formulated into the composition containing Component (A) and Component (B) of the present invention. As such an organic solvent, since Component (A) is less hydrolyzed and stable characteristics can be obtained, an organic solvent having no polar group is preferred, and for example, ethers such as diethyl ether, dipropyl ether and anisole; and aliphatic hydrocarbons such as hexane, heptane, octane and decane, etc. are preferred. Among them, dipropyl ether, heptane and octane are particularly preferably used.

The organic solvent is preferably used in an amount of 60 % by weight or less of the total amount of Component (A) and Component (B). It is more preferred that in the case of the aliphatic hydrocarbons, the amount thereof is 50 % by weight or less, and in the case of the ethers, the amount thereof is 20 % by weight or less. Further, since a dissolving agent which can be prepared to have a specific composition easily and has stable characteristics can be obtained when the dissolving agent containing such a solvent is evaporated to be regenerated and used, the organic solvent preferably has such a composition that it forms an azeotropic mixture with Component (B). Such an organic solvent may be used by, for example, mixing it with Component (A) and Component (B) at room temperature, and it is preferred to mix them under a condition that relative humidity is as low as 60 % or less.

As described above, the process for removing the cured polyorganosiloxane material of the present invention includes (1) a step of depolymerizing and dissolving said cured material attached to the surface of a substance, by the dissolving agent containing Component (A) and Component (B) described above; and (2) a step of washing the substance with a detergent.

Step (1) is carried out generally by dipping a substrate or an article to which the cured polyorganosiloxane material is attached, in the above dissolving agent. If necessary, said dissolving agent may be heated. Since depolymerization of the cured material is carried out favorably and less influence of heat is exerted on the substrate or article, the cured material is dipped to the said dissolving agent preferably at a range of room temperature to 90°C, particularly preferably by heating to 40 to 60°C. The dipping time varies depending on the attached amount of the cured polyorganosiloxane material attached to the substrate or the article, but it is preferably 1 minute to 1 hour, more preferably 2 to 30 minutes. In dipping, irradiation with ultrasonic wave, shaking, stirring or the like may be carried. Since removal can be carried out favorably, it is particularly preferred to use irradiation with ultrasonic wave in combination with other means. Further, spraying or the like may be carried out in place of dipping, and dipping and spraying may be used in combination. In the case of a substrate which such as that related to a construction, and therefore, cannot be dipped in the dissolving agent, the dissolving agent may be applied thereto at ambient temperature by a method of coating, spraying or the like.

In this step, by the action of Component (A), a part of the siloxane bond of the cured polyorganosiloxane material is cleaved, or an equilibration reaction with a part of Component (B) occurs to generate a polyorganosiloxane-depolymerized product which has a lower polymerization degree and does not include a crosslinked structure or is less crosslinked, whereby the cured material is dissolved in the dissolving agent.

Step (2) is a step of washing the substrate or the article after depolymerizing the cured lyorganosiloxane material and dissolving a part or almost all of the depolymerized product thereof in the dissolving agent by Step (1) described above, with a detergent containing an organosiloxane oligomer to remove the remaining cured polyorganosiloxane material and/or the depolymerized product thereof together with the remaining dissolving agent.

The organosiloxane oligomer to be used as a main component of the detergent may be either the same linear organosiloxane oligomer as Component (B) described above or a cyclic organosiloxane oligomer represented by the following formula:

[R₂SiO]ₛ

(wherein R is as described above, and s represents an integer of 3 to 7), and both of them may be used in combination. Similarly as in the case of Component (B), in the formula of the linear organosiloxane oligomer, R is preferably a methyl group, and m is preferably an integer of 0 to 3. As the cyclic organosiloxane oligomer, cyclic organosiloxane oligomers in which R is a methyl group are preferred, and among them, a cyclic organosiloxane oligomer in which s is 4 or 5 is particularly preferred since handling as a liquid is easy and they can be evaporated easily and have an excellent washing effect. Further, a branched organosiloxane oligomer, for example, represented by a compound represented by the formula:

CH₃Si[OSi(CH₃)₃]₃

may be used.

In addition to the organosiloxane oligomer described above, an additive may be formulated into the detergent. As such an additive, there may be mentioned various kinds of organic solvents exemplified by alcohols such as methanol, ethanol, n-propyl alcohol, isopropyl alcohol, n-butyl alcohol and t-butyl alcohol; ketones such as acetone and methyl ethyl ketone; esters such as ethyl acetate and butyl acetate; monoesters of polyvalent alcohols, such as ethylene glycol monomethyl ether and diethylene glycol monobutyl ether; hydrocarbons such as n-hexane, cyclohexane, n-octane and decane, etc., and volatile organic solvents are preferred. By formulating such an additive suitably, the depolymerized product of the cured polyorganosiloxane material can be removed favorably from the surface of the substance. In general, in the present invention, the additive may be not added, or when it is added, it is preferred to add alcohols or monoesters of polyvalent alcohols, and it is preferred to add 10 to 200 parts by weight of isopropyl alcohol or propylene glycol monomethyl ether based on 100 parts by weight of the organosiloxane oligomer. The detergent into which the additive is added is particularly preferably an azeotropic mixture since it exhibits washing and drying effects favorably, favorable removal without remaining the depolymerized product of the cured material on the surface of the substrate or the article can be carried out and it can be handled easily because less change in the composition is caused by volatilization, evaporation or the like. The composition of the azeotropic mixture varies depending on pressure. However, the azeotropic mixture produced under atmospheric pressure may be exemplified by a mixture comprising 54 parts by weight of hexamethyldisiloxane and 46 parts by weight of isopropyl alcohol, a mixture comprising 82 parts by weight of hexamethyldisiloxane and 18 parts by weight of propylene glycol monomethyl ether, etc. By using the detergent into which such alcohols or monoesters of polyvalent alcohols are formulated as the additive, removal of an ionic substance remaining on the surface of the substrate is carried out favorably.

It is preferred to carry out washing in Step (2) in combination with drying. That is, the substrate or the article may be air dried after washing is carried out by dipping it in the detergent similarly as in Step (1) described above, or vapor washing may be carried out by exposing the substrate or the article to vapor of the detergent. Since favorable removal without attachment of a remaining material to the surface of the substrate or the article can be carried out, vapor washing is preferred. Or else, dipping and vapor washing may be used in combination. It is preferred that dipping and vapor washing are carried out at a temperature of 10 to 90°C, particularly 20 to 80°C in the case of dipping; and at a temperature of 60 to 160°C which may vary depending on the boiling point of the vapor detergent, in the case of vapor washing, both for 1 to 20 minutes, particularly 2 to 5 minutes. For example, hexamethyldisiloxane has a boiling point of 100°C, octamethyltrisiloxane has a boiling point of 153°C, and the azeotropic mixture of hexamethyldisiloxane and isopropyl alcohol has a boiling point of 77°C. In the case of a substrate of which the above dipping and vapor washing are carried out with difficulty, Step (2) may be carried out by washing such a substrate by using a method of coating, spraying or the like similarly as in Step (1), followed by air drying.

The removal process of the present invention can be applied to various substances, i.e., materials of a substrate or an article, to which the cured polyorganosiloxane material is attached, for example, a metal, glass, ceramics and also various kinds of plastics such as a polyolefin, a polycarbonate, an acryl resin and an epoxy resin. The process of the present invention can be used for various kinds of substance with various shapes, including various kinds of equipment parts such as an electrode, semiconductor parts and engine-related parts; containers such as a can, a glass bottle and a caulker; substrates related to a construction, such as a roof, a wall surface, a joint and a sash of a building, etc.

In the cured polyorganosiloxane material to be removed, the polymer may be either pure polyorganosiloxane or a copolymer or a co-cured material with an organic polymer, such as silicone epoxy, silicone polyimide, silicone alkyd, silicone polyester and a polyoxyalkylene-siloxane copolymer. The process of the present invention can be applied to a cured material by various kinds of curing mechanisms such as addition type, condensation type, peroxide cure type, UV ray cure type and electron ray cure type. Various cured materials with various forms such as resins, elastomers and gels can be removed. Cured materials containing an inorganic filler, a pigment, etc. such as various kinds of silicone elastomers and paints can be removed without any problem. Various uses including a sealant, an adhesive seal material and a potting material for construction and industry uses; and various coating materials such as a conformal coating, bottle coating, hard coating, building maintenance coating, cloth coating and paints may be exemplified.

The dissolving agent for the cured polyorganosiloxane material and the process for removing the cured polyorganosiloxane material by using the same of the present invention have characteristics that the cured polyorganosiloxane material can be removed favorably from various substances such as metals, ceramics and plastics, i.e., a substrate and an article without corroding said substances, and the surface states of said substances after removal are also excellent.

That is, the phosphonitrile compound to be used as Component (A) of the dissolving agent of the present invention has strong cleavage reactivity to the siloxane bond of the cured material, but does not have an action of corroding a substrate or the like, even if when the substance is acidic or alkaline. On the other hand, the linear organosiloxane oligomer to be used as Component (B) has low surface tension, so that it is effective for penetrating into small gaps to allow the dissolving agent act on the cured material which exists there. Moreover, said Component (B) has no polarity and does not exert influence on any substrate and article. On the other hand, as compared with hydrocarbons which are also non-polar materials, Component (B) dissolves neither plastics to be used as a substrate or an article nor a primer of hard coating used there. By combining Component (A) with Component (B) as described above, the dissolving agent of the present invention exhibits excellent effects as described above, as compared with known dissolving agents.

Therefore, the dissolving agent and the removal process of the present invention are preferably applied to the case where the substances to which the cured polyorganosiloxane material has been attached are to be regenerated and used. Further, the surface states of said substances after removal are excellent, and favorable removal with less ionic residue can be carried out, so that the dissolving agent and the removal process of the present invention are effective when they are used for the case where electric and electronic parts or the like are to be regenerated and used. The dissolving agent and the removal process of the present invention are preferably applied to removal of a polyorganosiloxane conformal coating material or the like provided for moisture-proof surface treatment and particularly preferably applied to, for example, removal of the cured polyorganosiloxane material attached to an electrode substrate.

### EXAMPLES

In the following, the present invention is described in detail by referring to Reference examples, Preparation examples, Examples and Comparative examples. The present invention is not limited by these examples. In these examples, part represents part by weight, and ppm represents ppm by weight.

### Reference example 1 Synthesis of Cl₃PNP(O)Cl₂ (SCLP)

20.8 parts of phosphorus pentachloride, 2.93 parts of ammonium sulfate and 82.8 parts of 1,1,2,2-tetrachloroethylene were charged, and the mixture was refluxed under heating for 1 hour while stirring. After the solvent was removed by a rotary evaporator, the resulting product was purified by evaporation under reduced pressure to obtain 20 parts of a pale yellow solid having a boiling point of 110 to 115°C/0.1 Torr. As a result of identification, the solid obtained was a compound (SPLC) represented by the above formula.

### Reference example 2 Synthesis of linear phosphonitrile chloride (LPNC)

20.8 parts of phosphorus pentachloride, 2.7 parts of ammonium chloride and 82.8 parts of 1,1,2,2-tetrachloroethylene were charged, and the mixture was refluxed under heating for 8 hour while stirring. The reaction mixture was poured into petroleum ether to obtain precipitates. The precipitates were dried under reduced pressure to obtain 14 parts of a pale yellow solid. As a result of identification, the solid obtained was a compound (LPNC) represented by the formula: Cl₃P(NPCl₂)ₙNPCl₃·PCl₆.

### Reference example 3 Preparation of test substrate

On a comb-shaped electrode substrate (112 x 36 mm) made by glass epoxy resin in accordance with Electrode type 2 in JIS Z3197, 1 g of an addition reaction type silicone conformal coating material (ECC4864, trade name, produced by General Electric Co.) was coated evenly. The coating material was cured by heating at 110°C for 30 minutes to form a rubbery film, whereby a test substrate was prepared. The film obtained by curing the coating material was favorably adhered to the substrate and was not eliminated even when it was scrubbed with fingers.

### Preparation example 1 Preparation of Dissolving agent concentrate A

Into a container were charged 98 parts of hexamethyldisiloxane and 2 parts of SCLP obtained in Reference example 1. The mixture was stirred under nitrogen gas stream at 60°C to obtain a uniform solution. The solution was defined as Dissolving agent concentrate A.

### Preparation example 2 Preparation of Dissolving agent concentrate B

Into a container were charged 98 parts of hexamethyldisiloxane and 2 parts of LPNC obtained in Reference example 2. The mixture was stirred under nitrogen gas stream at 60°C to obtain a uniform solution. The solution was defined as Dissolving agent concentrate B.

### Preparation example 3 Preparation of Dissolving agent concentrate C

Into a container were charged 98 parts of octamethyltrisiloxane and 2 parts of LPNC obtained in Reference example 2. The mixture was stirred under nitrogen gas stream at 60°C to obtain a uniform solution. The solution was defined as Dissolving agent concentrate C.

### Example 1

5.0 parts of Dissolving agent concentrate B was diluted with 95.0 parts of hexamethyldisiloxane to prepare a LPNC solution having a concentration of 1,000 ppm. The test substrate was dipped in this solution, subjected to ultrasonic washing at 50°C for 5 minutes and then washed by being placed in hexamethyldisiloxane vapor at 100°C for 3 minutes to remove LPNC and the depolymerized silicone coating material, followed by drying.

By using the test substrate after washing, surface insulation resistance, ionic residue, appearance after 1 week and the re-coatability (adhesiveness) of the silicone conformal coating material (ECC4864) were measured. The results are shown in Table 1. The surface insulation resistance was measured by using a digital ultra-high resistance meter R8340 (trade name, produced by Advanced Co.) in accordance with JIS Z3197, and the ionic residue was measured by using Omegameter 600SMD (trade name, produced by Alpha Metals Co.) in accordance with MIL-P-28809.

The appearance was observed by a microscope and evaluated based on the following standard.
O: A silicone film does not remain, and a copper-plated substrate is not corroded.
X: A silicone film remains, and a copper-plated substrate is corroded.

The coating material was coated on the test substrate after washing and cured under the same conditions as in the preparation of the test substrate, and the re-coatability of the coating material was evaluated based on the following standard.
O: A film is favorably adhered to a substrate and is not eliminated even when it is scrubbed with fingers.
X: A film is eliminated from a substrate when it is scrubbed with fingers.

These evaluation results are shown in Table 1.

### Example 2

In the same manner as in Example 1 except for preparing a LPNC solution having a concentration of 2,000 ppm by diluting 10.0 parts of Dissolving agent concentrate B with 90.0 parts of hexamethyldisiloxane, the test substrate was treated, and the substrate after washing was evaluated. The results are shown in Table 1.

### Example 3

In the same manner as in Example 1 except for dipping the test substrate treated with the dissolving agent in hexamethyldisiloxane at 50°C for 3 minutes and then pulling it up, followed by drying in place of vapor washing with hexamethyldisiloxane, the test substrate was treated, and the substrate after washing was evaluated. The results are shown in Table 1.

### Example 4

In the same manner as in Example 1 except for carrying out vapor washing in vapor of a hexamethyldisiloxane/isopropyl alcohol (weight ratio: 54/46) azeotropic mixed solution at 77°C for 3 minutes, the test substrate was treated, and the substrate after washing was evaluated. The results are shown in Table 1.

### Example 5

In the same manner as in Example 1 except for using Dissolving agent concentrate A in place of Dissolving agent concentrate B, the test substrate was treated, and the substrate after washing was evaluated. The results are shown in Table 1.

### Example 6

In the same manner as in Example 1 except for diluting 5.0 parts of Dissolving agent concentrate C with 95.0 parts of octamethyltrisiloxane and dipping the test substrate in octamethyltrisiloxane at 80°C for 3 minutes in place of vapor washing with hexamethyldisiloxane, and then pulling it out, followed by drying, the test substrate was treated, and the substrate after washing was evaluated. The results are shown in Table 1.

### Example 7

In the same manner as in Example 1 except for diluting 5.0 parts of Dissolving agent concentrate C with 95.0 parts of octamethyltrisiloxane, carrying out shower washing at 60°C for 10 minutes by using the resulting solution in place of ultrasonic washing and dipping the test substrate in octamethylcyclotetrasiloxane at 70°C for 3 minutes in place of vapor washing with hexamethyldisiloxane, and then pulling it up, followed by drying, the test substrate was treated, and the substrate after washing was evaluated. The results are shown in Table 1.

### Comparative example 1

In the same manner as in Example 1 except for carrying out hot air drying at 60°C for 3 minutes in place of vapor washing with hexamethyldisiloxane, the test substrate was treated, and the substrate after drying was evaluated. The results are shown in Table 1.

### Comparative example 2

In the same manner as in Example 1 except for carrying out washing with isopropyl alcohol at 20°C for 5 minutes and then carrying out hot air drying in the same manner as in Comparative example 1 in place of vapor washing with hexamethyldisiloxane, the test substrate was treated, and the substrate after drying was evaluated. The results are shown in Table 1.

### Comparative example 3

In the same manner as in Example 1 except for carrying out hot air drying in the same manner as in Comparative example 2 in place of vapor washing with hexamethyldisiloxane, the test substrate was treated, and the substrate after drying was evaluated. The results are shown in Table 1.

### Comparative example 4

In the same manner as in Example 1 except for carrying out washing with isopropyl alcohol at 70°C and washing with ion exchange water at 20°C and then carrying out hot air drying in the same manner as in Comparative example 1 in place of vapor washing with hexamethyldisiloxane, the test substrate was treated, and the substrate after drying was evaluated. The results are shown in Table 1.

### Comparative example 5

In the same manner as in Example 1 except for carrying out treatment with methylene chloride at 20°C in place of depolymerization and dissolution with the LPNC solution and carrying out washing with methylene chloride vapor at 40°C for 3 minutes in the same manner in place of vapor washing with hexamethyldisiloxane, the test substrate was treated, and the substrate after washing was evaluated. The results are shown in Table 1.

### Comparative example 6

In the same manner as in Example 1 except for carrying out treatment with ethyl silicate at 20°C in place of depolymerization and dissolution with the LPNC solution and carrying out rinsing with ion exchange water at 20°C and hot air drying at 60°C in place of vapor washing with hexamethyldisiloxane, the test substrate was treated, and the substrate after drying was evaluated. The results are shown in Table 1.

### Comparative example 7

In the same manner as in Example 1 except for using a mixed solution of methylene chloride/dodecylbenzenesulfonic acid (weight ratio: 50/50) in place of depolymerization and dissolution with the LPNC solution and carrying out vapor washing with isopropyl alcohol at 82°C in place of vapor washing with hexamethyldisiloxane, the test substrate was treated, and the substrate after washing was evaluated. The results are shown in Table 1.

With respect to the test substrate obtained in Reference example 3, which was not subjected to treatment for removing the silicone conformal coating material, the same evaluation was conducted. The results are shown in Table 1.

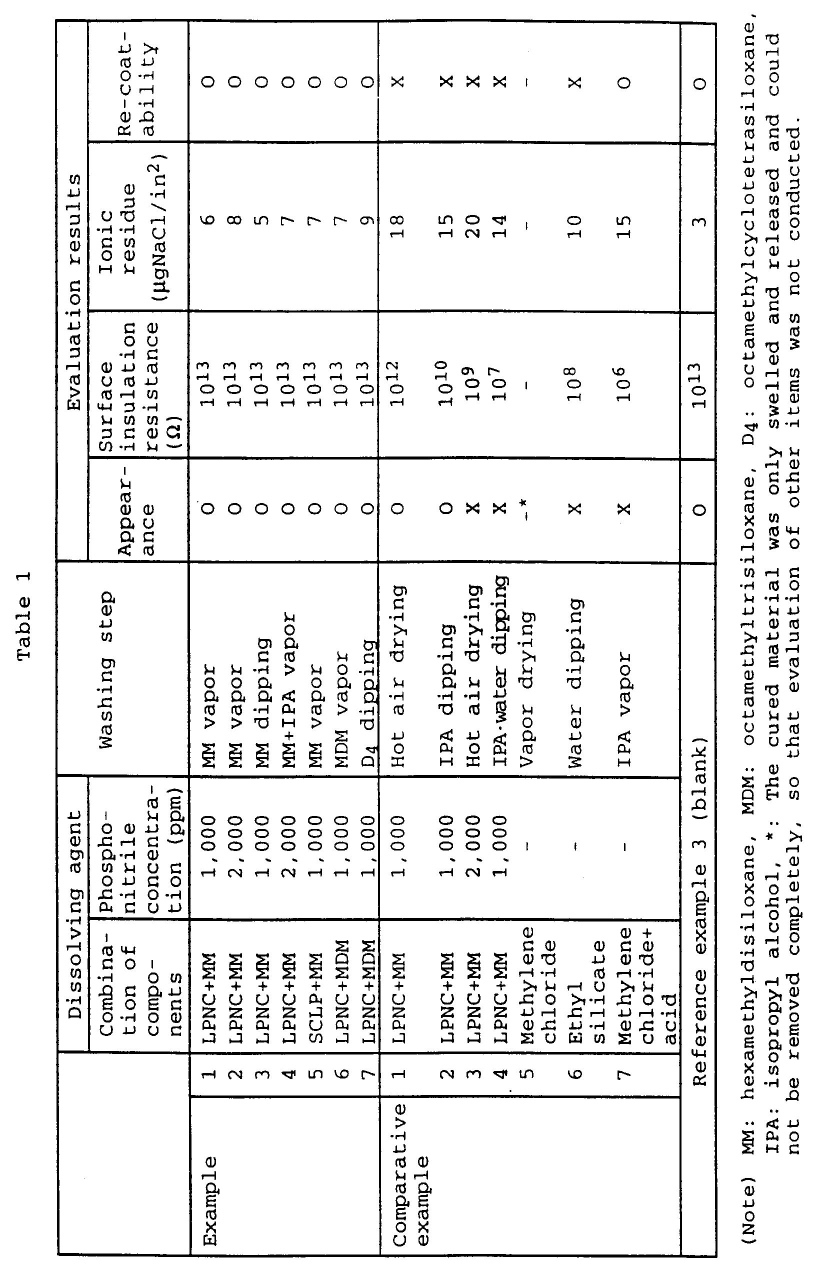

As can be clearly seen from Table 1, the test substrates of Examples 1 to 7 in which the dissolving agents of the present invention were used and the silicone conformal coating materials were removed by carrying out the dissolving step and the washing step of the present invention exhibit excellent appearance and re-coatability. The respective surface insulation resistances of 10¹³ Ω are maintained similarly as in the test substrate of Reference example 3. Further, the remaining ion concentrations are lower than those of the test substrates of Comparative examples 1 to 7.

## Claims

1. A dissolving agent for a cured polyorganosiloxane material, which comprises:
(A) a phosphonitrile compound and
(B) a linear organosiloxane oligomer represented by the formula:
R₃SiO[R₂SiO]ₘSiR₃
(wherein Rs represent substituted or unsubstituted monovalent hydrocarbon groups which may be the same or different; and m is an integer of 0 to 5).

2. The dissolving agent according to Claim 1, wherein the phosphonitrile compound is a linear phosphonitrile chloride represented by the formula:
OCl₂P(NPCl₂)ₙNPCl₃₋ₚ(X)ₚ (I)
OCl₂P(NPCl₂)ₙN(H)P(O)Cl_{2-q}(X)_{q} (II)
or
Cl₃P(NPCl₂)ᵣNPCl₃·PCl₆ (III)
(wherein X represents OH, OR¹ or OC(O)R² where R¹ and R² each represent an alkyl group, a cycloalkyl group, an aralkyl group or an aryl group; n is an integer of 0 to 10, p is 0, 1 or 2, q is 0 or 1, and r is an integer of 0 to 10).

3. A process for removing a polyorganosiloxane type cured material, which comprises:
(1) depolymerizing and dissolving a cured polyorganosiloxane material attached to a substance, by the dissolving agent according to Claim 1 or 2, and then
(2) washing the substance with a detergent containing an organosiloxane oligomer to remove the polyorganosiloxane type cured material together with the dissolving agent.
